Europäisches Patentamt

European Patent Office

Office européen des brevets

(19)

(11) Numéro de publication: **0 230 182 B1**

(12) **FASCICULE DE BREVET EUROPEEN**

(45) Date de publication de fascicule du brevet:
27.02.91

(51) Int. Cl.⁵: **G01N 27/20**, G01L 1/22

(21) Numéro de dépôt: 86402781.8

(22) Date de dépôt: **12.12.86**

(54) **Procédé pour la surveillance de fissures susceptibles de se produire dans des structures soumises à des contraintes.**

(30) Priorité: 16.12.85 FR 8518601

(43) Date de publication de la demande:
29.07.87 **Bulletin 87/31**

(45) Mention de la délivrance du brevet:
27.02.91 **Bulletin 91/09**

(84) Etats contractants désignés:
**DE ES GB IT NL SE**

(56) Documents cités:
**WO-A-83/03672**
**US-A- 4 179 940**
**US-A- 4 304 135**

(73) Titulaire: **AEROSPATIALE Société Nationale Industrielle**
**37, Boulevard de Montmorency**
**F-75016 Paris(FR)**

(72) Inventeur: **Grandpierre, Loic**
**25 rue des Artistes**
**F-31200 Toulouse(FR)**
Inventeur: **Moline, Augustin**
**15, avenue St. Exupéry**
**F-31820 Pibrac(FR)**

(74) Mandataire: **Bonnetat, Christian et al**
**CABINET BONNETAT 23, Rue de Léningrad**
**F-75008 Paris(FR)**

## Description

La présente invention concerne un procédé et un système destinés à la surveillance de la propagation des fissures susceptibles de se produire dans des structures soumises à des contraintes.

On sait que, dans des structures fortement sollicitées, telles que celles des aéronefs, des navires, des véhicules, des plateformes, des tuyaux, des fissures peuvent apparaître et/ou se développer en certains points critiques. Par exemple, de tels points critiques correspondent à des emplacements de rivets d'assemblage des tôles constituant la peau du fuselage d'un aéronef, des fissures risquant de se développer dans lesdites tôles à partir du bord des trous de passage desdits rivets.

Pour des raisons de sécurité évidentes, il est nécessaire d'inspecter de temps à autre ces points critiques, afin de vérifier que les éventuelles fissures ne compromettent pas par trop la résistance mécanique de la structure. Cependant, pour des raisons économiques, il est souhaitable d'adapter la maintenance à l'utilisation de la structure en n'effectuant des inspections et des réparations que lorsque la probabilité de découvrir un dommage est suffisamment importante. En effet, des pièces métalliques ou composites, soumises à un système de contraintes complexe lors de leur utilisation, peuvent voir apparaître et se développer des dommages dus à la fatigue à des moments très variables, suivant la manière dont ces pièces ont été utilisées.

Pour suivre la propagation de fissures, on connaît déjà, mis surtout en oeuvre pour des essais de laboratoires, des dispositifs tels que :

. des fils à casser, c'est-à-dire des fils métalliques ou en fibres de verre, qui sont collés le plus près possible du dommage attendu, perpendiculairement à la fissure ; ce sont des fils qui se rompent au fur et à mesure que la fissure progresse.

. des capteurs de contrôle non destructif tels que :

- palpeurs (à ultrasons, à courants de Foucault, etc...) qui sont placés au voisinage des points critiques. Dès que le défaut atteint le seuil de détectabilité, c'est-à-dire la taille détectable par la méthode, il est identifié par le dispositif ;
- sondes acoustiques, électriques ou optiques pouvant servir pour déterminer l'apparition d'une fissure de fatigue. Un tel dispositif est décrit dans US-A-4 179 940

De tels dispositifs sont généralement onéreux et ne peuvent faire une bonne surveillance que d'une zone très limitée et facilement accessible. Il nécessitent en outre une maintenance spécifique.

L'objet de la présente invention est de remédier à ces inconvénients et de réaliser un système de surveillance de propagation de fissure permettant l'utilisation de capteurs robustes et fiables, tels que des jauges de contraintes, tout en ne nécessitant aucune intervention humaine particulière. De plus, de par sa structure, le système selon l'invention, quoiqu'utilisable isolément, est particulièrement adapté à être associé à un système de surveillance de la fatigue des éléments de ladite structure en fonction desdites contraintes, pour former un système complet de surveillance en service de la tolérance de ladite structure aux dommages.

A cette fin, selon l'invention, le procédé pour la surveillance d'une fissure susceptible d'apparaître et/ou se propager en un point d'une structure soumise à des contraintes, est remarquable en ce que :

a) on détermine une longueur maximale admissible de fissure, au-delà de laquelle la résistance mécanique de ladite structure audit point risque d'être trop faible pour que ladite structure remplisse la fonction pour laquelle elle a été construite ;

b) on détermine une longueur de fissure initiale ;

c) on mesure en permanence les contraintes auxquelles est soumis ledit point de la structure ;

d) on calcule cumulativement, au fur et à mesure de l'application desdites contraintes, un accroissement théorique de la longueur de ladite fissure à partir de ladite longueur initiale, de façon à déterminer une longueur théorique instantanée de fissure ;

e) on compare en permanence ladite longueur théorique instantanée à ladite longueur maximale admissible ; et

f) on inspecte ledit point dès que ladite longueur théorique instantanée atteint ladite longueur maximale tolérable.

Le choix de la longueur de fissure initiale peut résulter d'une mesure réelle de cette longueur, par exemple au moyen d'un capteur à ultra-sons ou analogue, notamment lorsque la fissure est amorcée et détectable avant la mise en oeuvre de la présente invention. Cependant, notamment dans le cas où la fissure n'existe pas (structure neuve par exemple) ou n'est pas détectable par les capteurs connus, on donne à ladite longueur de fissure initiale une valeur arbitraire ou forfaitaire, déterminée par la réglementation, par l'expérience ou par la prudence. Par exemple, dans le cas où l'invention est appliquée à une structure sortant de fabrication (et ne devant donc pas encore comporter de fissure) dans laquelle des fissures risquent de se développer à partir d'un trou de passage de moyens d'assemblage, tels que des rivets, on peut choisir comme valeur pour la longueur de fissure initiale la largeur radiale de la bordure dudit trou recouverte par la tête desdits moyens d'assemblage ; ainsi, on se place dans l'hypothèse prudente, mais pessimiste, qu'une fissure existe déjà et que la longueur de cette fissure a la valeur maximale que peut avoir une fissure non visuellement détectable (car cachée par ladite tête des moyens d'assemblage).

Les contraintes auxquelles est soumis le point de la structure surveillé peuvent être mesurées au moyen de jauges de contraintes de type connu, par exemple montés dans un pont de Wheatstone. Ces jauges sont, lorsque ledit point est accessible, solidarisées à ladite structure, par exemple par collage, au voisinage direct de ce point. En revanche, lorsque ledit point est inaccessible, il est avantageux de disposer lesdites jauges en un point accessible, réagissant au même type de sollicitations que le point accessible associé, de façon que, en ce qui concerne les contraintes mesurées, ledit point accessible soit représentatif du point inaccessible. Dans ce dernier cas, par une analyse détaillée corroborée par l'expérience, on établit des fonctions de transfert permettant la corrélation entre les contraintes audit point inaccessible et celles audit point accessible.

La longueur maximale admissible de fissure est facilement déterminable par le calcul, en tenant compte du cahier des charges que doit respecter ladite structure.

Lors de l'inspection spécifiée sous f), plusieurs cas peuvent se produire :

1) aucune fissure n'est détectable : dans ce cas, on recommence les opérations c) à f) avec la même longueur initiale de fissure ;

2) une fissure est détectable, mais sa longueur est inférieure à ladite longueur admissible : dans ce cas, on recommence les opérations c) à f) en prenant comme longueur initiale de fissure la longueur réelle mesurée de ladite fissure ;

3) une fissure est détectable, mais sa longueur est supérieure à ladite longueur admissible : dans ce cas, on procède à la réparation correspondante dudit point de la structure ou à la réforme de celle-ci.

Aussi, dans le cas d'une structure surveillée depuis sa sortie de fabrication, le procédé selon l'invention est avantageusement le suivant :

a) on détermine une longueur maximale admissible de fissure, au-delà de laquelle la résistance mécanique de ladite structure audit point risque d'être trop faible pour que ladite structure remplisse la fonction pour laquelle elle a été construite ;

b) on attribue à une éventuelle fissure qui pourrait exister audit point à la fin du processus de fabrication de ladite structure une longueur initiale forfaitaire ;

g) on effectue les opérations c) à f) avec ladite longueur initiale forfaitaire ;

h) on répète l'opération g) tant qu'aucune fissure détectable ne se produit ; ou

i) on effectue les opérations c) à f) une ou plusieurs fois avec une ou plusieurs longueurs initiales réelles mesurées lors de l'inspection spécifié sous f).

De préférence, dans le procédé selon l'invention, le processus de calcul est remarquable :

j) en ce que, lors d'une opération c), on mesure les extremums successifs desdites contraintes et le nombre N des cycles successifs de variations de celles-ci ; de plus, pour chaque cycle de variations, on détermine la valeur maximale M et minimale m desdites contraintes C ainsi que le rapport $R = \frac{m}{M}$ et la différence dC = M-m ;

k) en ce que, préalablement à une opération d), on établit une table donnant, pour la géométrie de ladite structure, la valeur du rapport $\frac{K}{C}$, dans lequel K est le facteur d'intensité de contraintes, en fonction de la longueur l de fissure ; et

l) en ce que, lors d'une opération d), on calcule :

11) la variation dK du facteur d'intensité de contraintes à partir de l'expression :

$$dK = \frac{K}{C} \cdot dC$$

12) la vitesse théorique $\frac{dl}{dN}$ de propagation de fissure en fonction du nombre N des cycles de variations des contraintes à l'aide d'une expression $\frac{dl}{dN} = F(R,dK)$, dans laquelle F (R,dK) est une fonction du rapport $R = \frac{m}{M}$ et de la variation dK du facteur d'intensité de contraintes ;

13) par intégration de la vitesse théorique $\frac{dl}{dN}$, l'accroissement théorique de la longueur de la fissure ;

14) par addition de ladite longueur initiale déterminée sous l'opération b) correspondante et dudit accroissement théorique obtenu sous 13), la longueur théorique instantanée de fissure.

Avantageusement, la fonction F (R,dK) spécifiée sous 12) est du type :

$$F = c [ (a + bR) dK ]^m$$

dans laquelle a,b,c et m sont des constantes.

Pour la mise en oeuvre du procédé selon l'invention, on prévoit un système comportant au moins un calculateur électronique.

Les figures du dessin annexé feront bien comprendre comment l'invention peut être réalisée.

La figure 1 est un schéma synoptique d'un exemple de réalisation d'un système selon l'invention.

Les figures 2 et 3 illustrent le fonctionnement du système de la figure 1.

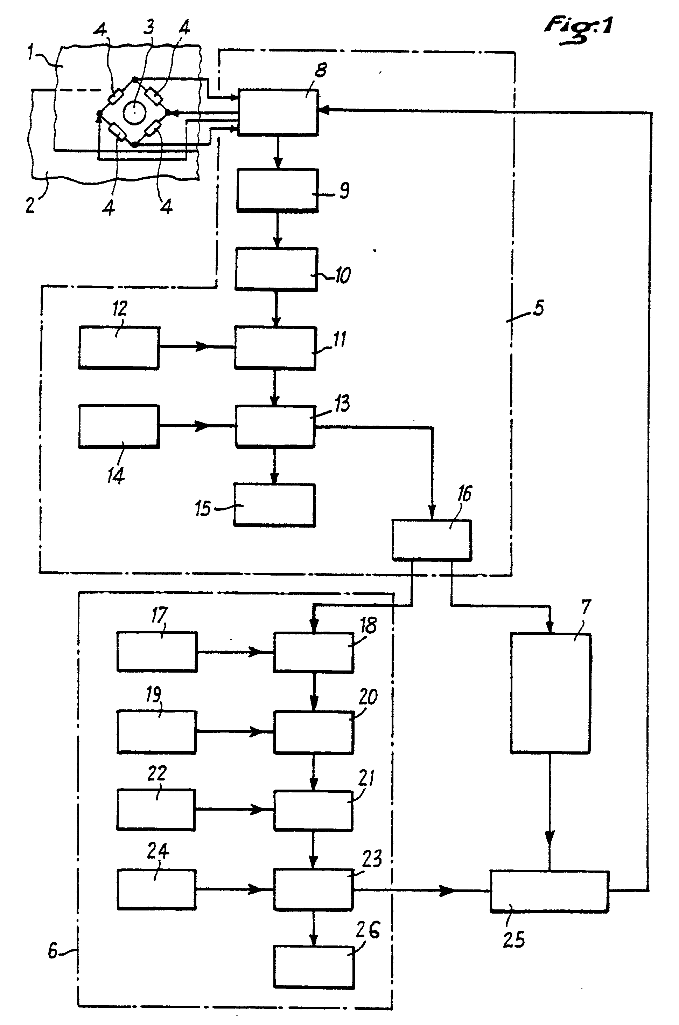

Le système, conforme à l'invention et représenté sous forme d'un schéma synoptique sur la figure 1, est par exemple destiné à surveiller les dommages subis, en ce qui concerne la propagation de fissures et la fatigue, par la peau du fuselage d'un aéronef. Dans ce cas, il est avantageux que ledit système soit réalisé sous une forme compacte susceptible d'être embarquée à bord dudit aéronef, de façon à communiquer à l'équipage ou au personnel de maintenance, en temps utile, le résultat de ses calculs.

Sur la figure 1, on a représenté sommairement deux portions de tôles 1 et 2 de ladite peau du fuselage, dont les bords adjacents se chevauchent et sont assemblés par des rivets 3.

Au voisinage des rivets 3 à surveiller (ou bien encore au voisinage de rivets 3 accessibles représentatifs de rivets 3 à surveiller, mais inaccessibles), on a fixé sur ladite peau un ensemble de jauges de contraintes 4, montrées dans un pont de Wheatstone.

Le système de l'invention comporte une unité 5 destinée à la détection et à la mesure des contraintes subies par ladite peau au voisinage des rivets 3 surveillés, une unité 6 de surveillance de la propagation des fissures risquant d'apparaître dans ladite peau au voisinage dedits rivets 3 et une unité 7 de mesure de la fatigue de ladite peau.

L'unité de détection et de mesure 5 comporte un dispositif 8 destiné à l'alimentation électrique d'un ou de plusieurs ponts de jauges 4, ainsi qu'à l'acquisition des signaux provenant de ceux-ci.

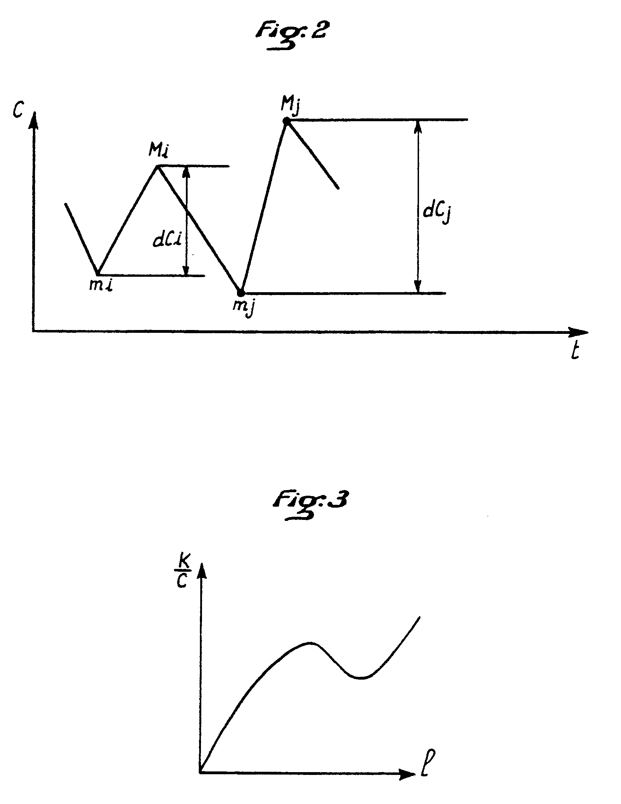

Ces signaux, représentatifs des contraintes C appliquées à ladite peau à l'emplacement desdits ponts de jauges 4, sont variables en fonction du temps t passant par une succession d'extremums (maximums ($M_i$, $M_j$) et minimums ($m_i$, $m_j$) comme cela est représenté schématiquement sur la figure 2. Ils sont appliqués à un dispositif de traitement 9 pour y être filtrés et amplifiés de façon usuelle.

Les signaux traités, issus du dispositif 9, sont transmis à un détecteur 10. Celui-ci détecte les extremums $m_i$, $M_i$, calcule, pour chaque cycle de variations des contraintes C, les différences $dC_i = M_i - m_i$, ainsi que les rapports $R_i = \frac{m_i}{M_i}$ et comptabilise lesdits cycles.

Afin de ne pas utiliser inutilement la capacité de calcul du système selon l'invention, celui-ci comporte un comparateur 11, permettent de comparer chaque $dC_i$ à un seuil minimal, $dC_m$, qui est délivré par un dispositif d'affichage 12 et au-dessous duquel lesdites différences $dC_i$ sont éliminées pour ne pas être prises en compte.

En revanche, pour chaque $dC_i$ supérieure au seuil minimal $dC_m$, le maximum $M_i$ correspondant est adressé à un autre comparateur 13, pour être comparé à un maximum admissible $M_a$ délivré par un système de référence 14.

Si les maximum $M_i$ atteint ou dépasse la valeur du maximum admissible $M_a$, ce maximum $M_i$ ainsi que son heure d'apparition sont mémorisés dans une mémoire 15, en vue d'une analyse ultérieure.

A sa sortie 16, l'unité 5 fournit les rapports $R_i$, les différences $dC_i$ et le nombre $N$ des cycles de contraintes détectés et retenus.

Ces grandeurs sont fournies à la fois à l'unité 6 et à l'unité 7.

L'unité 6, spécialement destinée à la surveillance des fissures pouvant apparaître au voisinage des rivets 3, comporte une mémoire 17 dans laquelle est emmagasinée, sous forme de table, une courbe (telle que celle de la figure 3) donnant la variation du facteur d'intensité de contrainte $\frac{K}{C}$ en fonction de la longueur I d'une fissure.

Une telle courbe est déterminée soit par un calcul préliminaire détaillé, soit par l'expertise d'un dommage survenu en essai ou en service.

A titre d'exemple, on a trouvé que la fonction :

$$\frac{K}{C} = \sqrt{\pi \times 1}$$

était représentative des variations du facteur d'intensité de contraintes pour des tôles 1 et 2 en un alliage 2124 T 351, pour une gamme de longueur de fissure comprise entre 5 et 100 mm. Par suite, dans ce cas, la table stockée dans la mémoire 17 est la suivante :

| l (mm) | K/C ($\sqrt{mm}$) |
|---|---|
| 5 | 3,95 |
| 10 | 5,60 |
| 15 | 6,86 |
| 20 | 7,93 |
| 25 | 8,86 |
| 30 | 9,71 |
| 35 | 10,49 |
| 40 | 11,21 |
| 45 | 11,89 |
| 50 | 12,53 |
| 55 | 13,14 |
| 60 | 13,73 |
| 65 | 14,29 |
| 70 | 14,83 |
| 75 | 15,35 |
| 80 | 15,85 |
| 85 | 16,34 |
| 90 | 16,81 |
| 95 | 17,28 |
| 100 | 17,72 |

Le dispositif de calcul 18 de l'unité 6, qui reçoit, à la fois, la variation de contrainte dC (sous la forme des divers dCi) de la sortie 16 et la table $\frac{K}{C}$ de la mémoire 17 est donc capable de calculer la variation d'intensité de contraintes $dK = \frac{K}{C} .dC$.

Par ailleurs, l'unité 6 comporte une autre mémoire 19 dans laquelle est emmagasinée, sous forme de table, une fontion F(R,dK) représentative de la vitesse théorique $\frac{dl}{dN}$ de propagation des fissures.

Une telle fonction F(R,dK) peut par exemple être choisie comme celle d'ELBER, du type :

$$\frac{dl}{dN} = c [ (a+ bR) dK]^m$$

dans laquelle a,b,c et m sont des constantes.

Par exemple, pour l'alliage 2124 T 351 mentionné ci-dessous en une épaisseur de 6 mm, ces constantes prennent les valeurs suivantes :

a = 0,184
b = 0,13

$c = 7.10^{-7}$
m = 3,2

dans le cas où les contraintes C sont exprimées en hbars.

Par suite, le dispositif de calcul 20, qui reçoit à la fois les coefficients a,b,c et m (de la mémoire 19) et R et dK (du dispositif de calcul 18) peut calculer la vitesse de propagation théorique de la fissure en fonction des contraintes mesurées par les jauges 4.

Dans l'intégrateur 21, cette vitesse de propagation théorique est intégrée pour fournir un accroissement théorique de la longueur de la fissure. A cet accroissement théorique de longueur est additionné une longueur initiale de fissure emmagasinée dans une mémoire réglable 22, de sorte que l'intégrateur 21 fournit à sa sortie la longueur théorique de fissure. Celle-ci est transmise à un comparateur 23, qui reçoit par ailleurs une longueur maximale admissible de fissure, stockée dans une mémoire 24.

Dans le cas où la longueur théorique de fissure est au moins égale à cette longueur maximale admissible, le comparateur 23 actionne une alarme 26.

Dans le cas où la longueur théorique de fissure est inférieure à la longueur maximale admissible, elle est emmagasinée dans une mémoire 25 qui reçoit de plus les résultats de l'unité de mesure de fatigue 7 et est en liaison avec le dispositif 8.

Il va de soi que les différents dispositifs de calcul, comparateurs, mémoires, etc... mentionnés ci-dessus peuvent faire partie d'un calculateur électronique.

Ainsi, grâce à l'invention, on obtient un système présentant de nombreux avantages.

En effet, il peut être intégré dans un système de bord d'aéronef pour surveiller la structure de celui-ci et il peut utiliser des microprocesseurs de technologie récente permettant en outre par un logiciel sophistiqué l'usage de fonctions de transfert, ainsi que la reconnaissance de la cause d'une anomalie du signal. Il peut effectuer tous les calculs en temps réel pendant l'exploitation, sans intervention humaine particulière. Il réalise en effet, à l'aide de modèles de calculs sophistiqués validés par des essais, les calculs de l'endommagement en fatigue, de la propagation d'un dommage initial jusqu'à la longueur détectable, de la propagation d'un dommage détectable jusqu'à une longueur critique. Il peut également mémoriser des paramètres de situation dans le cas de dépassement d'un seuil de contraintes, ce qui permet, grâce à une analyse détaillée des contraintes de la structure, de mémoriser moins d'informations.

En ce qui concerne les calculs de propagation à partir d'un dommage détectable ou hypothétique, ceux-ci tiennent compte du fait qu'à l'issue de chaque inspection, la longueur de fissure peut être réinitialisée à la longueur détectable par les moyens d'inspections prévus.

L'unité 7 de calcul de la fatigue peut être de type connu effectuant par exemple les calculs de fatigue à partir de données élaborées, telles que des tapis de GOODMAN adaptés au matériau et à la géométrie des points surveillés.

## Revendications

1. Procédé pour la surveillance d'une fissure susceptible d'apparaître et/ou de se propager en un point d'une structure (1,2) soumise à des contraintes, caractérisé en ce que :

a) on détermine une longueur maximale admissible de fissure, au-delà de laquelle la résistance mécanique de ladite structure audit point risque d'être trop faible pour que ladite structure remplisse la fonction pour laquelle elle a été construite ;

b) on détermine une longueur initiale de fissure ;

c) on mesure en permanence (4) les contraintes auxquelles est soumis ledit point de la structure ;

d) on calcule cumulativement (18,20), au fur et à mesure de l'application desdites contraintes, un accroissement théorique de la longueur de ladite fissure à partir de ladite longueur initiale, de façon à déterminer une longueur théorique instantanée de fissure ;

e) on compare (23) en permanence ladite longueur théorique instantanée à ladite longueur maximale admissible ; et

f) on inspecte ledit point, dès que ladite longueur théorique instantanée atteint ladite longueur maximale admissible.

2. Procédé selon la revendication 1, caractérisé en ce que la longueur initiale de fissure est déterminée par une mesure.

3. Procédé selon la revendication 1, caractérisé en ce que la longueur initiale de fissure est déterminée de façon forfaitaire.

4. Procédé selon la revendication 1 et 3, caractérisé en ce que, dans le cas où aucune fissure n'est détectable lors de l'inspection effectuée sous f), on recommence les opérations c) à f) avec la même longueur initiale de fissure.

5. Procédé selon l'une des revendications 1 ou 4, caractérisé en ce que, dans le cas où, lors de l'inspection spécifiée sous f) ladite fissure est détectable et sa longueur est inférieure à ladite longueur maximale admissible, on recommence les opérations c) à f) en prenant comme longueur initiale de fissure la longueur réelle mesurée de ladite fissure.

6. Procédé selon la revendication 1, caractérisé en ce que, dans le cas où, lors de l'inspection spécifiée sous f) ladite fissure est détectable et sa longueur est supérieure à ladite longueur maximale admissible, on procède à la réparation correspondante dudit point de la structure ou à la réforme de celle-ci.

7. Procédé selon les revendications 1 et 3, destiné à la surveillance d'une fissure susceptible d'apparaître et/ou de se propager en un point d'une structure soumise à des contraintes, caractérisé en ce que :

a) on détermine une longueur maximale admissible de fissure, au-delà de laquelle la résistance mécanique de ladite structure audit point risque d'être trop faible pour que ladite structure remplisse la fonction pour laquelle elle a été construite ;

b) on attribue à une éventuelle fissure qui pourrait exister audit point à la fin du processus de fabrication de ladite structure une longueur initiale forfaitaire ;

g) on effectue les opérations c) à f) avec ladite longueur initiale forfaitaire ;

h) on répète l'opération g) tant qu'aucune fissure détectable ne se produit ; ou

i) on effectue les opérations c à f) une ou plusieurs fois avec une ou plusieurs longueurs initiales réelles mesurées lors de l'inspection spécifiée sous f).

8. Procédé selon l'une des revendications 1 ou 7, caractérisé :

j) en ce que, lors d'une opération c), on mesure les extremums successifs desdites contraintes et le nombre N des cycles successifs de variations de celles-ci ; de plus, pour chaque cycle de variations, on détermine la valeur maximale M et minimale m desdites contraintes C, ainsi que le rapport $R = \frac{m}{M}$ et la différence $dC = M-m$ ;

k) en ce que, préalablement à une opération d), on établit une table donnant pour la géométrie de ladite structure, la valeur du rapport $\frac{K}{C}$, dans lequel K est le facteur d'intensité de contrainte, en fonction de la longueur I de fissure ; et

l) en ce que, lors d'une opération d), on calcule :

l1) la variation dK du facteur d'intensité de contraintes à partir de l'expression :
$$dK = \frac{K}{C} \cdot dC$$
l2) la vitesse théorique $\frac{dl}{dN}$ de propagation de fissure

en fonction du nombre N des cycles de variation des contraintes à l'aide d'une expression $\frac{dl}{dN} = F(R,dK)$, dans

laquelle $F(R,dK)$ est en fonction du rapport $R = \frac{m}{M}$ et de la variation dK du facteur d'intensité de contraintes :

l3) par intégration de la vitesse théorique $\frac{dl}{dN}$, l'accroissement théorique de la longueur de la fissure ;

l4) par addition de ladite longueur initiale déterminée sous l'opération b) correspondante et dudit accroissement théorique obtenu sous l3), la longueur théorique instantanée de fissure.

9. Procédé selon la revendication 3, caractérisé en ce que la fonction $F(R,dK)$ spécifiée sous 12) est du type : $F = c[(a + bR)\,dK]^m$ dans laquelle a,b,c et m sont des constantes.

## Claims

1. Method for monitoring a crack liable to appear and/or to grow in one point of a loaded structure (1,2), characterized in that it consists in :
   a) determining a maximum acceptable crack length, beyond which the mechanical strength of said structure in said point risks to be too low for said structure to fulfill the function for which it was built ;
   b) determining an initial crack length ;
   c) permanently measuring (4) the stresses to which said point of the structure is subjected ;
   d) cumulatively reckoning (18,20), as and when said stresses are applied, a theoretical increase of the length of said crack from said initial length, so as to determine an instant theoretical length of the crack ;
   e) permanently comparing (23) said instant theoretical length to said maximum acceptable length ; and
   f) inspecting said point as soon as said instant theoretical length reaches said maximum acceptable length.

2. Method according to claim 1, characterized in that said initial crack length is determined by measurements.

3. Method according to claim 1, characterized in that said initial crack length is preset.

4. Method according to claims 1 and 3, characterized in that if no crack can be detected during the inspection conducted under f) operations c) to f) are repeated with the same initial crack length.

5. Method according to one of claims 1 or 4, characterized in that if said crack can be detected during the inspection specified under f) and if its length is less than said maximum acceptable length, operations c) to f) are repeated, using as initial crack length, the actual measured length of the crack.

6. Method according to claim 1, characterized in that if said crack can be detected during the inspection specified under f) and if its length is more than said maximum acceptable length, it is proceeded to a corresponding repair of said point of the structure or said structure is scrapped.

7. Method according to claims 1 and 3, for monitoring a crack liable to appear and/or to grow in one point of a loaded structure, characterized in that it consists in :
   a) determining a maximum acceptable crack length beyond which the mechanical strength of the structure at said point risks to be too low for said structure to fulfill the function for which it was built ;
   b) attributing a set initial length to any crack that may be present at said point at the end of the structure manufacturing process ;
   g) performing operations c) to f) with said set initial length ;
   h) repeating operation g) as long as no detectable crack occurs ; or
   i) performing operations c) to f) once or several times with one or more actual initial lengths measured during the inspection specified under f).

8. Method according to one of claims 1 or 7, characterized in that :
   j) during an operation c) the successive extremes of said stresses and the number $\overline{N}$ of successive cycles of variations thereof are measured, and for each cycle of variation, the maximum $\overline{M}$ and minimum $\overline{m}$ values of said stresses $\overline{C}$ are determined, as well as the ratio $R = \frac{m}{M}$
   and the difference $dC = M-m$ ;
   k) prior to an operation d), a table is established which table gives, for the geometry of said structure, the value of ratio $\frac{K}{C}$, in which K is the stress intensity factor, as a function of the crack length l ; and

l) during an operation d) :

l.1) the variation dK of the stress intensity factor is calculated from the expression :

$dK = \frac{K}{C} \cdot dC$

l.2) the theoretical speed $\frac{dl}{dN}$ of crack growth is calculated as a function of the number N of cycles of variations of the stresses, with the help of an expression $\frac{dl}{dN} = F\,(R,dK)$ in which F (R,dK) is a function of the ratio $R = \frac{m}{M}$ and of the variation dK of the stress intensity factor ;

l.3) by integration of the theoretical speed $\frac{dl}{dN}$, the theoretical increase of the crack length is calculated ;

l.4) the instant theoretical crack length is calculated by adding said initial length determined under the corresponding operation b) and said theoretical increase obtained under 1.3).

9. Method according to claim 3,
characterized in that the function F (R,dK) specified under I.2) is of the type :

$F = c\,[\,(a + bR)\,dK\,]^m$

in which a, b, c and m are constants.

**Ansprüche**

1. Verfahren zum Überwachen von Rissen in durch Spannung beaufschlagten rissformungsempfindlichen Strukturen, dadurch **gekennzeichnet,** daß

a) die dem Riß einräumbare maximale Länge bestimmt wird, über die hinaus die mechanische Festigkeit an dieser Stelle Gefahr läuft, zu geschächt zu werden, um die Struktur die ihr zugedachte Funktion erfüllen zu lassen;

b) die Anfangsrißlänge bestimmt wird;

c) die Spannungen ständig gemessen (4) werden, durch die die Stelle der Struktur beaufschlagt wird;

d) im gleichen Maße der Spannungsbeaufschlagung eine theoretische Zunahme der Länge des Risses ausgehend von der Anfangslänge kumulativ berechnet (18, 20) wird, um eine theoretische Momentanrißlänge zu bestimmen;

e) die theoretische Momentanlänge zur einräumbaren Maximallänge ständig verglichen (23) wird und

f) die Stelle inspiziert wird, ab der die theoretische Momentanlänge die einräumbare Maximallänge erreicht.

2. Verfahren nach Anspruch 1, dadurch **gekennzeichnet,** daß die Anfangsrißlänge durch eine Messung bestimmt wird.

3. Verfahren nach Anspruch 1, dadurch **gekennzeichnet,** daß die Anfangsrißlänge pauschal bestimmt wird.

4. Verfahren nach den vorhergehenden Ansprüchen 1 und 3, dadurch **gekennzeichnet,** daß für den Fall, daß bei der unter f) durchgeführten Inspektion kein Riß ermittelt werden kann, die Schritte c) bis f) mit derselben Anfangsrißlänge erneut durchgeführt werden.

5. Verfahren nach einem der vorhergehenden Ansprüche 1 oder 4, dadurch **gekennzeichnet,** daß für den Fall, daß bei der unter f) durchgeführten Inspektion ein Riß ermittelt werden kann und dessen Länge unter der einräumbaren maximalen Länge liegt, die Schritte c) bis f) erneut durchgeführt werden, wobei als Anfangsrißlänge die gemessene Istlänge des Risses genommen wird.

6. Verfahren nach Anspruch 1, dadurch **gekennzeichnet,** daß für den Fall, daß bei der unter f) durchgeführten Inspektion ein Riß ermittelt werden kann und dessen Länge über der einräumbaren maximalen Länge liegt, die entsprechende Reparatur oder die Wiederherstellung der Stelle der Struktur vorgenommen wird.

7. Verfahren nach den vorhergehenden Ansprüchen 1 und 3 zum Überwachen von Rissen in durch Spannung beaufschlagten rissformungsempfindlichen Strukturen, dadurch **gekennzeichnet,** daß

a) die dem Riß einräumbare maximale Länge bestimmt wird, über die hinaus die mechanische Festigkeit an dieser Stelle Gefahr läuft, zu geschächt zu werden, um die Struktur die ihr zugedachte Funktion erfüllen zu lassen;

b) dem möglichen Riß, der an der Stelle bei Beendigung des Herstellungsvorgangs der Struktur auftreten könnte, eine pauschale Anfangslänge beigemessen wird;

g) die Schritte c) bis f) mit der pauschalen Anfangslänge durchgeführt werden;

h) solange sich kein ermittelbarer Riß einstellt, der Schritt g) wiederholt wird oder

i) die Schritte c) bis f) mit einem oder mehreren anläßlich der unter f) angegebenen Inspektion gemessenen Anfangsistwerten einmal oder mehrere Male durchgeführt werden.

8. Verfahren nach einem der vorhergehenden Ansprüche 1 oder 7, dadurch **gekennzeichnet, daß**

j) beim Schritt c) die sukzessiven Extremwerte der Spannungen sowie die Anzahl N der sukzessiven Zyklen ihrer Veränderungen gemessen und darüber hinaus für jeden Veränderungszyklus der Maximal- sowie Minimalwert M bzw. m der Spannungen C und auch das Verhältnis $R = \frac{m}{M}$ sowie die Differenz dC = M-m bestimmt werden;

k) vor dem Schritt d) eine Tabelle erstellt wird, die für die Geometrie der Struktur den Wert der Beziehung $\frac{K}{C}$ gibt, wobei K den Spannungsstärke- oder -intensitätsfaktor in Abhängigkeit von der Rißlänge l darstellt, und

l) bei Schritt d) berechnet wird:

l1) die Veränderung dK des Spannungsstärke- oder -intensitätsfaktors ausgehend vom Ausdruck:

$$dK = \frac{K}{C} . dC$$

l2) die theoretische Geschwindigkeit $\frac{dl}{dN}$ der Rißfortpflanzung in Abhängigkeit von der Zahl N der Spannungsveränderungszyklen mittels des Ausdrucks $\frac{dl}{dN} = F(R,dK)$, worin F (R,dK) abhängig ist von dem Verhältnis R $= \frac{m}{M}$ und der Veränderung dK des Spannungsstärkefaktors:

l3) durch Integration der theoretischen Geschwindigkeit $\frac{dl}{dN}$, die theoretische Zunahme der Rißlänge sowie

l4) durch die Addition der unter dem entsprechenden Schritt b) bestimmten Anfangslänge und der unter l3) erhaltenen theoretischen Zunahme die theoretische Momentanrißlänge.

9.  Verfahren nach Anspruch 3, dadurch **gekennzeichnet**, daß die unter l2) angegebene Funktion F (R,dK) gegeben ist durch

$$F = c \left[(a + bR) dK\right]^{m,}$$

worin a,b,c und m Konstanten sind.

EP 0 230 182 B1

Fig.1

*Fig. 2*

*Fig. 3*